# EUROPEAN PATENT APPLICATION

(11) **EP 4 668 671 A2**
(43) Date of publication of application: **24.12.2025**
(21) Application number: 25213373.1
(22) Date of filing: 19.07.2021
(51) Int. Cl.: H04L 9/08

(54) **MOBILE TERMINAL AND PRODUCT REGISTRATION METHOD OF SAME**

(30) Priority: 16.07.2021 KR 20210093613
(62) Divisional of application: 21935431.3
(71) Applicant: LG Electronics Inc., Yeongdeungpo-gu Seoul 07336 (KR)
(72) Inventor: EOM, Jiwoong, 08592 Seoul (KR); KIM, Sujung, 08592 Seoul (KR); LEE, Eunhyun, 08592 Seoul (KR); NA, Changju, 08592 Seoul (KR)
(74) Representative: Vossius & Partner Patentanwälte Rechtsanwälte mbB

(57) **Abstract**

A mobile terminal according to an embodiment of the present disclosure can receive an automatic registration request for automatic registration of one of one or more home appliances displayed on an automatic registration guide screen, and display an automatic registration process screen indicating that automatic registration of the corresponding home appliance is in progress in response to the received automatic registration request.

## Description

### [TECHNICAL FIELD]

The present disclosure relates to automatic registration of home appliances to a server.

### [BACKGROUND ART]

When a home appliance is delivered to a customer, a registration process is required to confirm that the home appliance is owned by the customer.

A conventional home appliance registration procedure has been performed by pressing a physical key (or a confirmation key) provided in a home appliance.

However, in the conventional home appliance registration method, the input method of the physical key is different for each home appliance, and the contents of the guide for the registration procedure are different from each other. Thus, the customer needs to learn to register for each product.

In addition, the physical key has to be input within a limited time. The customer has trouble understanding the guide and inputting the physical key into the product for a limited time (for example, three minutes). Thus, customers often fail to register their products.

In particular, when analyzing the cause of the customer's product registration failure, the number of cases where the physical key input fails and the product is registered by other methods tends to be greater than the number of cases where the physical key input is successful to perform product registration.

### [DISCLOSURE OF INVENTION]

### [TECHNICAL PROBLEM]

The present disclosure aims to automatically register a product to a server without requesting a customer to input a physical key.

The present disclosure aims to automatically search for a product delivered to customers and automatically register the product to a server.

### [TECHNICAL SOLUTION]

A mobile terminal according to an embodiment of the present disclosure may receive an automatic registration request for automatic registration of one out of one or more home appliances displayed on an automatic registration guide screen, and display an automatic registration process screen indicating that automatic registration of the corresponding home appliance is in progress in response to the received automatic registration request.

The mobile terminal may receive, from a first server, an auto registration key corresponding to a MAC address of the home appliance according to the reception of the auto registration request, and transmit the received auto registration key to a second server and the home appliance.

The mobile terminal may perform the automatic registration in a background.

### [ADVANTAGEOUS EFFECTS]

According to an embodiment of the present disclosure, since it is unnecessary to provide a user with a different physical key usage method and a different guide document for each product, a user does not need a learning process for product registration.

In addition, since it is unnecessary to force input of a physical key within a limited time (for example, three minutes) during product registration, convenience is provided to a user.

In addition, since product registration is automatically performed in the background, it is possible to provide a convenience in which there is almost no UI provided to a user.

Moreover, a UX of a new experience that enables other Internet services to be used without interruption during product registration may be provided to a user.

### [BRIEF DESCRIPTION OF DRAWINGS]

FIGS. 1 to 3 are diagrams for describing a process of registering a home appliance to a server according to a related art.
FIG. 4a is a diagram for describing a configuration of a product registration system according to an embodiment of the present disclosure.
FIG. 4b is a diagram for describing a configuration of a mobile terminal according to an embodiment of the present disclosure.
FIG. 4c is a diagram for describing a configuration of a server according to an embodiment of the present disclosure.
FIG. 5 is a ladder diagram for describing an operating method of a product registration system according to an embodiment of the present disclosure.
FIG. 6 is a diagram for describing a process of transmitting delivery completion information to a logistics server 430 according to an embodiment of the present disclosure.
FIGS. 7a and 7b are diagrams for describing a process of automatically registering a home appliance on a mobile terminal of a user according to an embodiment of the present disclosure.
FIG. 8 is a detailed diagram of a process of transmitting a push notification according to an embodiment of the present disclosure.
FIG. 9 is a ladder diagram of a product registration system for describing operations S505 to S515 of FIG. 5 in detail.
FIGS. 10 and 11 are ladder diagrams for describing a process of automatic product registration of a home appliance in detail according to an embodiment of the present disclosure.
FIG. 12 is a diagram for describing a screen indicating that automatic registration of a home appliance is completed according to an embodiment of the present disclosure.
FIG. 13 is a diagram for describing a screen displayed when automatic registration of a home appliance fails according to an embodiment of the present disclosure.

### [BEST MODE FOR CARRYING OUT THE INVENTION]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

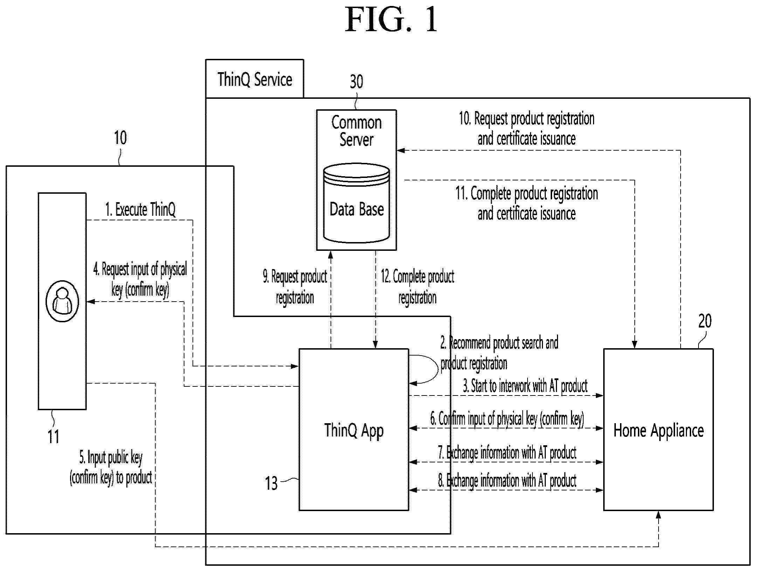

FIGS. 1 to 3 are diagrams for describing a process of registering a home appliance to a server according to a related art.

Registering the home appliance to the server may be an operation of authenticating that an owner of the home appliance is a user.

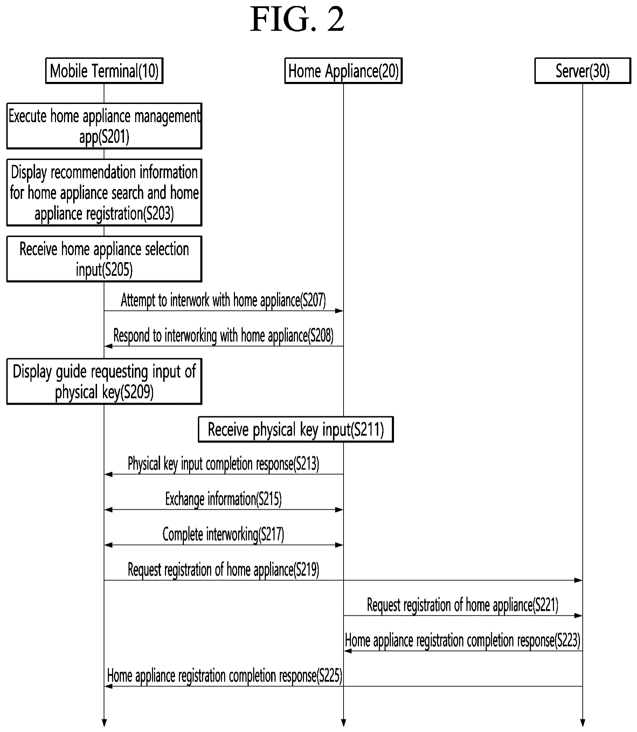

Referring to FIGS. 1 and 2, a home appliance management system 1 includes a mobile terminal 10, a home appliance 20, and a server 30.

The mobile terminal 10 may be one of a smartphone and a smart pad.

The home appliance 20 is an electronic device provided in a house, such as a washing machine, a refrigerator, an air purifier, and an air conditioner.

Hereinafter, a process of registering a home appliance according to a related art will be described with reference to FIGS. 1 and 2.

The mobile terminal 10 executes a home appliance management app (application) (S201). The home appliance management app is an application for registration and operation control of the home appliance, and may be installed in the mobile terminal 10.

The home appliance management app may be called a ThinQ app, as illustrated in FIG. 1.

The mobile terminal 10 displays recommendation information for search and registration of home appliances (S203). The recommendation information may include a search result of one or more home appliances provided in the house.

The mobile terminal 10 receives an input for selecting a specific home appliance among the one or more home appliances (S205).

The mobile terminal 10 attempts to interwork with the selected home appliance 20 for wireless connection (S207). The mobile terminal 10 may attempt to interwork with the home appliance 20 by using a Software enabled Access Point (SoftAP). The SoftAP may perform a function of a wireless access point in software and to operate like a wireless AP.

The mobile terminal 10 may attempt to interwork with the home appliance 20 by driving the SoftAP using a wireless LAN module.

The mobile terminal 10 receives an interworking response from the home appliance 20 (S208), and displays a guide of requesting input of a physical key (or a confirmation key) according to the received interworking response (S209).

The input of the physical key may be an input for registering the home appliance 20 to the home appliance management app to manage the home appliance.

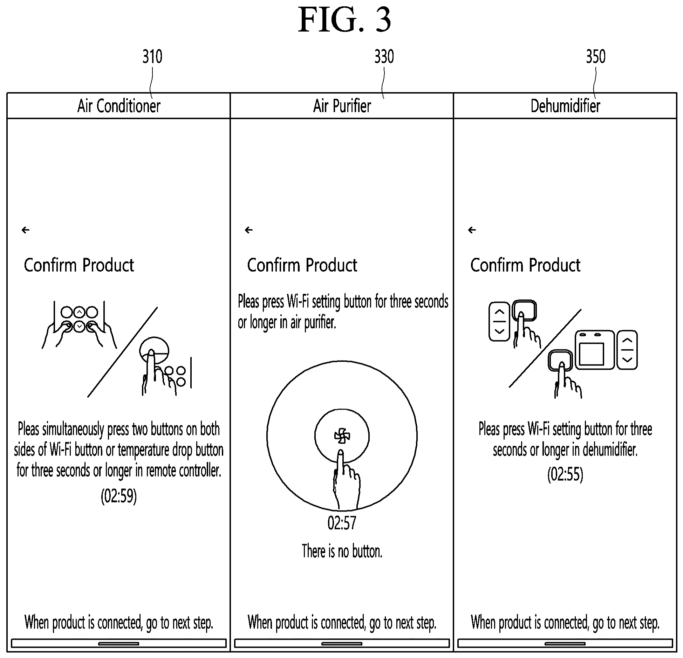

FIG. 3 illustrates an example of such a guide of requesting a physical key input for each of a plurality of home appliances.

Each guide may include text of requesting to press a specific physical key provided in the home appliance for 3 seconds or longer.

The shape of each guide illustrated in FIG. 3 may vary depending on the home appliance selected in operation S205.

For example, a first guide 310 is a guide of requesting input of a physical key for product registration of an air conditioner, a second guide 330 is a guide for product registration of an air purifier, and a third guide 350 is a guide for product registration of a dehumidifier.

The shape of each guide is different because the shape of the physical key provided in each home appliance is different.

The home appliance 20 receives a physical key input through a user input (S211), and transmits, to the mobile terminal 10, a physical key input completion response indicating that the physical key input is completed (S213).

Thereafter, the mobile terminal 10 and the home appliance 20 exchange information (S215) and complete the interworking with each other (S217).

The mobile terminal 10 and the home appliance 20 may exchange their model names and product identification numbers with each other.

The physical key input may be satisfied when the physical key provided in the home appliance 20 is selected for three seconds or longer.

Thereafter, the mobile terminal 10 transmits, to the server 30, a registration request requesting the registration of the home appliance 20 to the server 30 (S219). Similarly, the home appliance 20 transmits, to the server 30, a registration request requesting the registration of the home appliance 20 to the server 30 (S221).

In particular, the home appliance 20 may additionally transmit a certificate issuance request to the server 30 in addition to the product registration request as illustrated in FIG. 1.

The server 30 transmits a registration completion response indicating completion of product registration to the home appliance 20 (S223). The server 30 transmits, to the home appliance 20, a certificate issuance completion response indicating certificate issuance in addition to the registration completion response as illustrated in FIG. 1.

When the registration of the home appliance 20 and the issuance of the certificate are completed, the server 30 transmits, to the mobile terminal 10, a completion response indicating that the registration of the home appliance is completed (S225).

As illustrated in FIG. 3, according to the related art, the method of inputting the physical key is different for each product, and thus, the contents of the guide may vary.

In addition, the physical key has to be input within a limited time. the customer has trouble understanding the guide and inputting the physical key into the product for a limited time, e.g., three minutes. Thus, customers often fail to register their products.

In particular, when analyzing the cause of the customer's failure of product registration, the number of cases where the physical key input fails and the product is registered by other methods is greater than the number of cases where the physical key input is successful to perform product registration.

Hereinafter, a method of automatically searching for home appliances delivered to customers and automatically registering them in a server will be described.

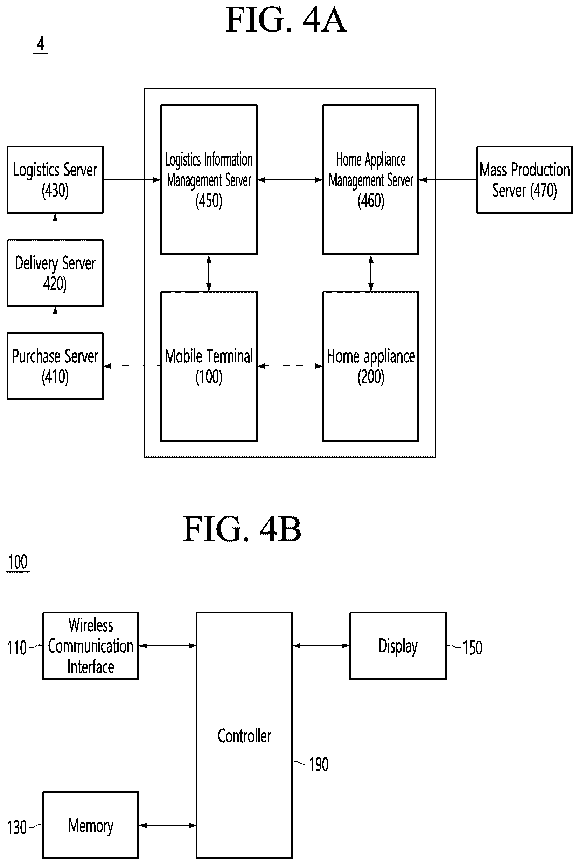

FIG. 4a is a diagram for describing a configuration of a product registration system according to an embodiment of the present disclosure.

Referring to FIG. 4a, in an embodiment, a product registration system 4 may include a purchase server 410, a delivery server 420, a logistics server 430, a mobile terminal 100, a home appliance 200, a logistics information management server 450, a home appliance management server 460, and a mass production server 470.

In another embodiment, the product registration system 4 may include only the mobile terminal 100, the home appliance 200, the logistics information management server 450, and the home appliance management server 460.

When a user purchases the home appliance 200, purchase information of the home appliance 200 may be transmitted to the purchase server 410, and the purchase server 410 may transmit the purchase information to the delivery server 420.

The purchase information may be user information and a model name of the home appliance 200, and the user information of the home appliance 200 may be a user ID for accessing a home appliance management app.

The delivery server 420 may transmit the purchase information and the product information of the home appliance 200 to the logistics server 430. The product information may include a serial number or a logistics barcode of the home appliance 200.

The delivery server 420 is a server for standardization of production standard information and management of integrated production information, and may be divided into a Global View that manages major production and quality indicators and a Local View that supports on-site production execution.

The logistics server 430 may transmit, to the logistics information management server 450, the purchase information and the product information received from the delivery server 420.

The logistics server 430 may transmit a delivery-related notification to customers who purchase products that pass through a manufacturer's logistics center.

The mass production server 470 may transmit a MAC address and a serial number of the mass-produced home appliance to the home appliance management server 460.

The MAC address of the home appliance may be a unique address that uniquely identifies the home appliance.

The serial number of the home appliance may be a character code used to authenticate that the product is genuine.

The home appliance management server 460 may store, in a database, the MAC address and the serial number of the home appliance received from the mass production server 470.

That is, the home appliance management server 460 may map and store MAC addresses and serial numbers corresponding to a plurality of home appliances.

In addition, in FIG. 4a, the logistics information management server 450 and the home appliance management server 460 are described as separate components, but the present disclosure is not limited thereto, and may be configured as one server.

FIG. 4b is a diagram for describing the configuration of the mobile terminal according to an embodiment of the present disclosure.

The mobile terminal 100 according to an embodiment of the present disclosure may include a wireless communication interface 110, a memory 130, a display 150, and a controller 190.

The wireless communication interface 110 may transmit and receive data to and from external devices, such as the home appliance 200, the logistics management server 450, and the home appliance management server 460, by using wireless communication technology.

For example, the wireless communication interface 110 may transmit and receive sensor information, a user input, a control signal to and from the external devices.

The communication technology used by the wireless communication interface 110 may include Global System for Mobile communication (GSM), Code Division Multi Access (CDMA), Long Term Evolution (LTE), 5G, Wireless LAN (WLAN), and Wireless-Fidelity (Wi-Fi).

The memory 130 may store data supporting various functions. For example, the memory 130 may store software for driving an application.

The display 150 displays (outputs) information processed by the mobile terminal 100.

The display 150 may display execution screen information of an application program driven in the mobile terminal 100 or user interface (UI) and graphic user interface (GUI) information according to the execution screen information.

The display 150 may implement a touch screen by forming a mutual layer structure with the touch sensor or being integrally formed with the touch sensor.

The touch screen may provide an input interface between the mobile terminal 100 and the user.

The controller 190 may control overall operations of the mobile terminal 100.

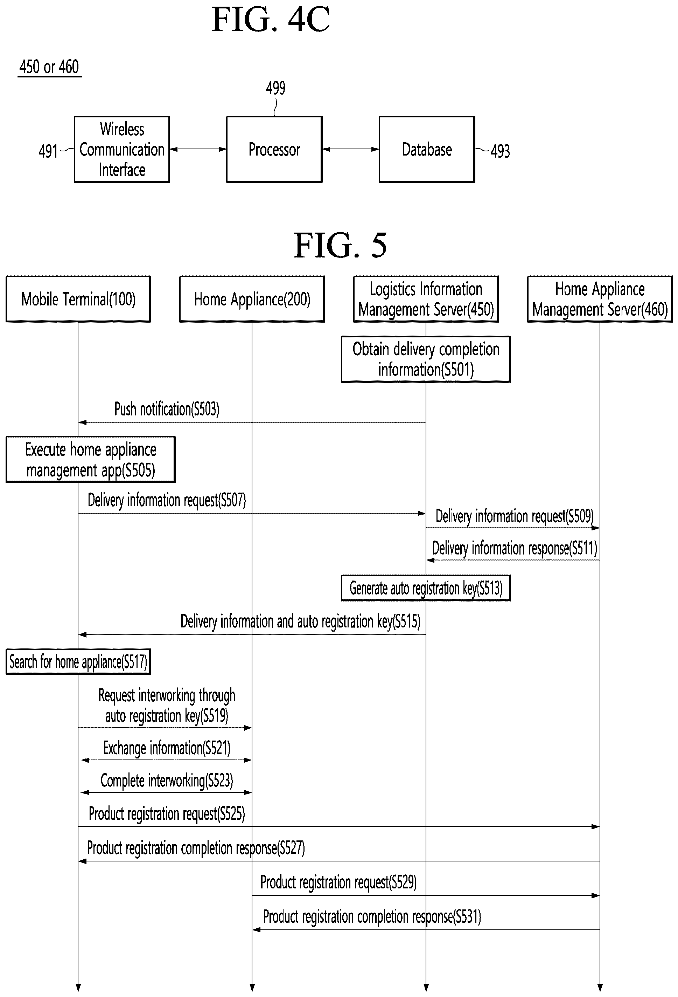

FIG. 4c is a diagram for describing the configuration of the server according to an embodiment of the present disclosure.

The components of the server illustrated in FIG. 4c may be components of the logistics information management server 450 or the home appliance management server 460 illustrated in FIG. 4a.

The server may include a wireless communication interface 491, a database 493, and a processor 499.

The wireless communication interface 491 may perform wireless communication with the mobile terminal 100, the home appliance 200, or the external server.

The communication technology used by the wireless communication interface 491 may include GSM, CDMA, LTE, 5G, WLAN, and Wi-Fi.

The database 493 of the distribution information management server 450 may store delivery completion information of the product received from the logistics server 430. The delivery completion information may include user information, a logistics barcode, and a serial number.

The processor 499 may control overall operations of the server.

The processor 499 of the logistics information management server 450 may generate an auto registration key for automatic registration of the home appliance 200.

The processor 499 of the home appliance management server 460 may determine whether to register the home appliance 200 based on the certificate issuance request received from the home appliance 200.

The database 493 of the home appliance management server 460 may store a plurality of MAC addresses received from the mass production server 470 and a plurality of serial numbers corresponding to the plurality of MAC addresses.

FIG. 5 is a ladder diagram for describing an operating method of the product registration system according to an embodiment of the present disclosure.

Hereinafter, the registration process of the home appliance may be a process of confirming whether the home appliance delivered to the customer is the appliance purchased by the customer.

Referring to FIG. 5, the logistics information management server 450 obtains delivery completion information indicating that delivery of the home appliance 200 is completed (S501).

In an embodiment, the delivery completion information may include one or more of a serial number and a logistics barcode of the delivered home appliance 200 and user information about the user that is the owner of the delivered home appliance 200.

The user information may include a user ID of the home appliance management app or information identifying a user related to the user ID.

The serial number of the home appliance 200 may be a character code used to authenticate that the home appliance 200 is a genuine product purchased at a manufacturer or an agency.

The logistics barcode may be a code for identifying a country, a manufacturer, a product type, and the like. The logistics barcode may be configured in the form of a QR code.

The logistics information management server 450 may receive delivery completion information from a terminal of a delivery service man who delivers the home appliance 200.

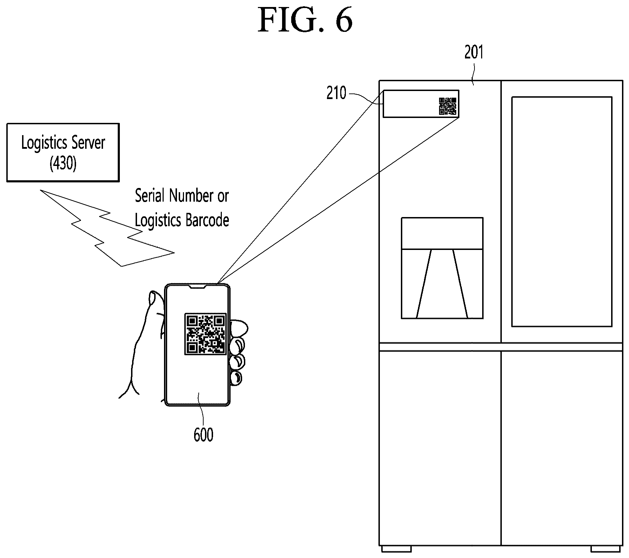

FIG. 6 is a diagram for describing a process of transmitting delivery completion information to the logistics server 430 according to an embodiment of the present disclosure.

Referring to FIG. 6, the home appliance is a refrigerator 201, and a product information tag 210 containing the corresponding product information is attached to the front surface of the refrigerator 201.

A delivery service man may read a serial number or a logistic barcode included in the product information tag 210 through his/her terminal 600.

That is, the product information item may include a serial number or a logistics barcode (or a QR code).

The terminal 600 of the delivery service man may transmit a scanned serial number or logistics barcode to the logistics server 430.

The logistics server 430 may transmit, to the logistics information management server 450, delivery completion information including the serial number or the logistics barcode.

In another embodiment, the terminal 600 of the delivery service man may transmit the scanned serial number or logistics barcode directly to the logistics information management server (450).

Again, FIG. 5 is described.

The logistics information management server 450 transmits a push notification to the mobile terminal 100 of the user based on the delivery completion information (S503).

The logistics information management server 450 may transmit a push notification to the mobile terminal 100 of the corresponding user through the home appliance management app, based on the user information included in the delivery completion information.

In an embodiment, the push notification may be a notification indicating that the delivery of the home appliance 200 is completed.

In another embodiment, the push notification may be a notification requesting the registration of the delivered home appliance 200 because the delivery of the home appliance 200 is completed.

The mobile terminal 100 executes the home appliance management app based on the received push notification (S505).

The mobile terminal 100 transmits, to the logistics information management server 450, a delivery information request requesting delivery information according to the execution of the home appliance management app (S507).

The delivery information request may be a request for searching which home appliance has been delivered to the user's home.

In particular, the delivery information request may be a request for a MAC address of the home appliance 200 for which the delivery has been completed corresponding to the user ID.

That is, the delivery information may include the MAC address of the home appliance 200 that has been delivered to the user corresponding to the user ID.

The logistics information management server 450 transmits, to the home appliance management server 460, the delivery information request received from the mobile terminal 100 (S509).

The logistics information management server 450 may obtain a serial number or a logistics barcode corresponding to the user ID included in the delivery information request.

The logistics information management server 450 may obtain a serial number or a logistics barcode corresponding to the user ID based on the delivery completion information obtained in operation S501.

The logistics information management server 450 receives, from the home appliance management server 460, a delivery information response including delivery information in response to the delivery information request (S511).

The home appliance management server 460 may obtain the MAC address of the home appliance 200 mapped to the serial number or the logistics barcode, and may transmit, to the logistics information management server 450, a delivery information response including the obtained MAC address.

The logistics information management server 450 generates an auto registration key for automatic registration of the home appliance 200 based on the delivery information response (S513).

The auto registration key may be a valid key only for a certain time. That is, the auto registration key may be a key valid only for a certain time, such as one-time password (OTP).

The certain time may be one hour, but this is only an example. The auto registration key cannot be used as a valid key after a certain time has elapsed.

The logistics information management server 450 may invalidate the auto registration key when the authentication process of the auto registration key is not performed within one hour after the auto registration key is generated. The invalidated auto registration key cannot be used for automatic registration.

The logistics information management server 450 may generate the auto registration key, and after one hour has elapsed, the auto registration key may be mapped to the MAC address of the home appliance 200.

That is, the logistics information management server 450 may generate the auto registration key mapped to the MAC address of the home appliance 200.

The logistics information management server 450 transmits the generated auto registration key and delivery information to the mobile terminal 100 (S515).

The mobile terminal 100 searches for the home appliance 200 based on the delivery information (S517).

The mobile terminal 100 may search for the home appliance 200 by using the MAC address included in the delivery information.

The mobile terminal 100 may activate SoftAP to confirm whether a device having the MAC address is found.

The mobile terminal 100 transmits an interworking request to the found home appliance 200 through the auto registration key (S519).

The mobile terminal 100 may transmit the auto registration key to the home appliance 200.

The mobile terminal 100 may encrypt the auto registration key and transmit the encrypted auto registration key to the home appliance 200.

The mobile terminal 100 and the home appliance 200 exchange information with each other in response to the interworking request (S521) and complete the interworking based on the exchanged information (S523).

After the interworking with the home appliance 200 is completed, the mobile terminal 100 transmits, to the home appliance management server 460, a product registration request requesting registration of the home appliance 200 (525).

The product registration request may include the user information, the MAC address, and the auto registration key.

The home appliance management server 460 performs a procedure for registering the home appliance 200 in response to the product registration request and transmits a product registration response indicating the registration result to the mobile terminal 100 (S527).

Similarly, after the interworking with the home appliance 200 is completed, the home appliance 200 transmits, to the home appliance management server 460, a product registration request requesting registration of the home appliance 200 (529).

The home appliance management server 460 registers the home appliance 200 in response to the product registration request, and transmits, to the home appliance 200, the product registration response indicating the registration result (S531).

In an embodiment, the home appliance management server 460 may compare the auto registration key received from the home appliance 200 with the auto registration key received from the mobile terminal 100.

The home appliance management server 460 may receive the MAC address and the auto registration key from the home appliance 200, and may receive the MAC address and the auto registration key of the home appliance 200 from the mobile terminal 100.

The home appliance management server 460 may determine whether the MAC addresses match each other. When the MAC addresses match each other, the home appliance management server 460 may determine whether the auto registration keys are identical to each other.

When the auto registration keys are identical to each other, the home appliance management server 460 may complete the product registration of the home appliance 200.

Operations S525 and S527 may occur simultaneously with operations S529 and S531, or their precedence may be changed.

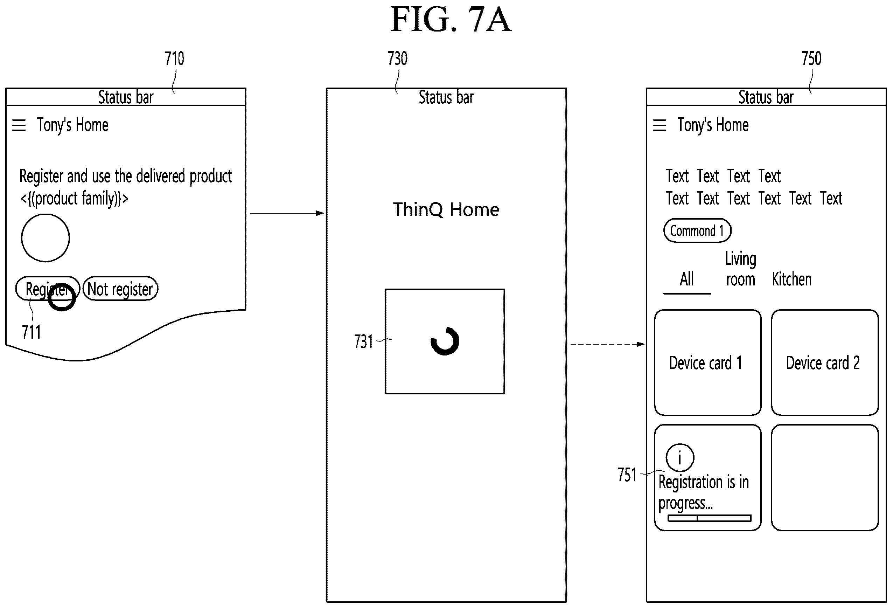

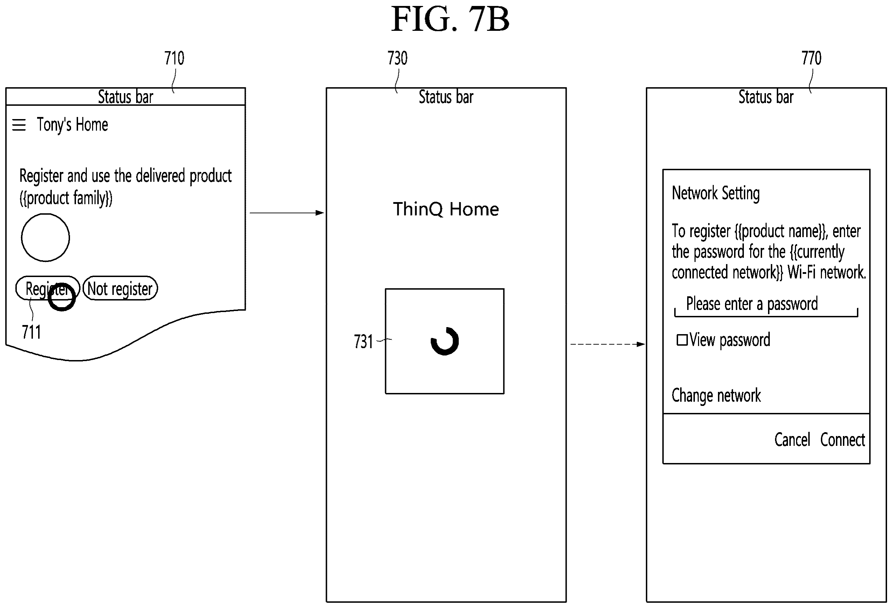

FIGS. 7a and 7b are diagrams for describing a process of automatically registering a home appliance on a mobile terminal of a user according to an embodiment of the present disclosure.

First, referring to FIG. 7a, a mobile terminal 100 may display a automatic registration guide screen 710 on a display.

The mobile terminal 100 may display the automatic registration guide screen 710 by executing a home appliance management app upon reception of the push notification of FIG. 5.

The automatic registration guide screen 710 may include text that guides a user to automatically register the delivered home appliance, and an icon representing the home appliance.

When a register button 711 included on the automatic registration guide screen 710 is selected, the mobile terminal 100 may display a home appliance search screen 730.

The selection of the register button 711 may be a button for triggering operation S507 of FIG. 5. Operations after operation S505 may be performed on the product registration system 4 according to selection of the register button 711.

The selection of the register button 711 may be an automatic registration request for automatic registration of the home appliance.

The network scan screen 730 may be a screen indicating that a Wi-Fi network is being searched for.

When the Wi-Fi network is automatically connected, the mobile terminal 100 may display an automatic registration process screen 750 indicating that the home appliance is being automatically registered. The automatic registration process screen 750 may include a device card 751 indicating that the home appliance is being automatically registered to the home appliance management server 460.

On the other hand, the automatic registration process may be performed in the background. Accordingly, the user does not need a separate input for registration of the home appliance, thereby significantly improving convenience.

As the automatic registration process progresses in the background, it is possible to provide a new user experience that enables other tasks to be used through the mobile terminal 100.

On the other hand, when it is necessary to input a password for the Wi-Fi network, the mobile terminal 100 may display a network information input screen 770 indicating that a network password is required for product registration.

The network information input screen 770 may be a screen displayed when the mobile terminal 100 performs an initial connection with an access point (AP) provided in the house.

Through the automatic connection, when it is unnecessary to input the password of the Wi-Fi network, the mobile terminal 100 may display the automatic registration process screen 750 after displaying the network scan screen 730, as illustrated in FIG. 7a.

When it is necessary to input the password of the Wi-Fi network, the mobile terminal 100 may display the network information input screen 770 after displaying the network scan screen 730, as illustrated in FIG. 7b.

As described above, according to an embodiment of the present disclosure, since it is unnecessary to provide a user with a different physical key usage method and a different guide document for each product, a user does not need a learning process for product registration.

In addition, since it is unnecessary to force input of a physical key within a limited time (for example, three minutes) during product registration, convenience is provided to a user.

In addition, since product registration is automatically performed in the background, it is possible to provide a convenience in which there is almost no UI provided to a user.

In addition, when the delivered product is retrieved from the user terminal through the delivery information notification (push notification), the user permits the product registration, so that the product registration is automatically performed. That is, it is unnecessary to provide another guide UX for product registration (however, the UI is provided when the initial in-house AP information input is required, FIG. 7b).

Moreover, a UX of a new experience that enables other Internet services (Store, product monitoring, etc.) to be used without interruption during product registration may be provided to a user.

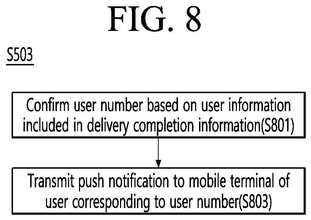

FIG. 8 is a detailed diagram of a process of transmitting a push notification according to an embodiment of the present disclosure.

That is, FIG. 8 is a detailed diagram of operation S503 of FIG. 5.

Referring to FIG. 8, the logistics information management server 450 confirms a user number based on user information included in delivery completion information (S801).

The user information included in the delivery completion information may include user account information. The user account information may include a user ID for accessing the home appliance management app.

The logistics information management server 450 may store a user number corresponding to the user ID. The user number may be a unique number for identifying the user.

The logistics information management server 450 transmits the push notification to the mobile terminal 100 of the user corresponding to the confirmed user number (S803).

The logistics information management server 450 may extract a user ID corresponding to the confirmed user number and transmit the push notification to the mobile terminal 100 corresponding to the extracted user ID.

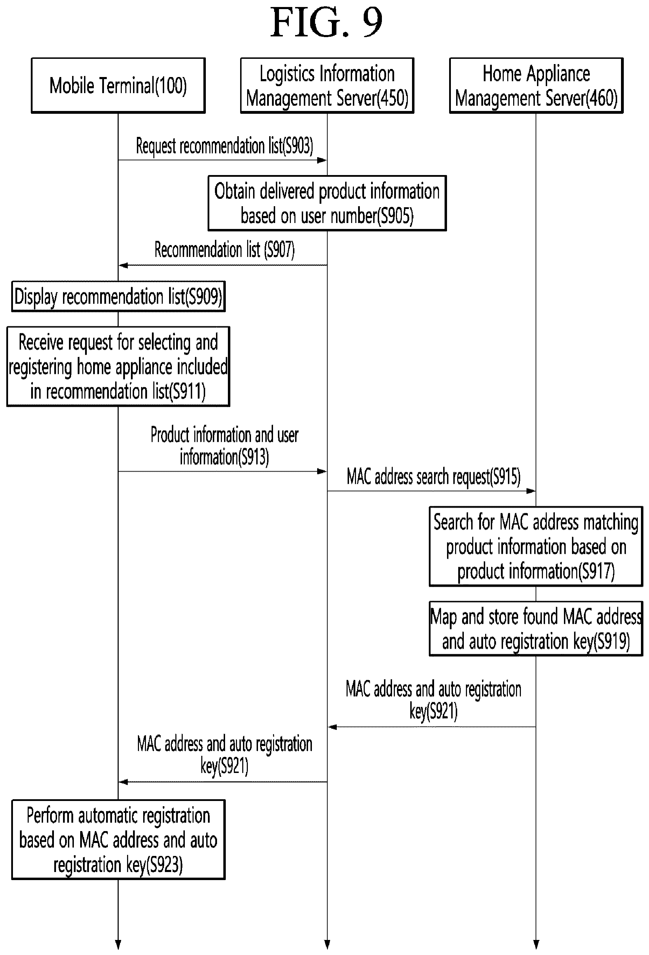

FIG. 9 is a ladder diagram of the product registration system for describing operations S505 to S515 of FIG. 5 in detail.

Referring to FIG. 9, the mobile terminal 100 transmits, to the logistics information management server 450, a recommendation list request for checking whether there is a home appliance to be registered (S903).

The recommendation list request may include a user number identifying a user, and an EMP token corresponding to the user number. The EMP token may be a token issued to identify a user account for user security. The EMP token may be updated at regular intervals.

Based on the user number included in the received recommendation list request (903), the logistics information management server 450 obtains product information about a product that has been delivered (S905).

The product information is mapped to the user number, and may include a serial number or a logistics barcode of the home appliance 200 that has been delivered.

The logistics information management server 450 transmits the recommendation list to the mobile terminal 100 based on the product information (S907).

The logistics information management server 450 may transmit the recommendation list to the mobile terminal 100 only when the received user number is mapped to the EMP token.

The logistics information management server 450 may transmit, to the mobile terminal 100, the recommendation list including information about the home appliance that have been delivered, based on the serial number or the logistics barcode included in the product information.

The information about the home appliance may include one or more out of a type of the home appliance and a model name of the home appliance.

The mobile terminal 100 displays the recommendation list (S909), and receives a request for selecting and registering a specific home appliance among one or more home appliances included in the recommendation list (S911).

The mobile terminal 100 transmits product information and user information of the selected home appliance 200 to the logistics information management server 450 in response to the received request (S913).

The user information may include a user number and an EMP token.

When the user number and the EMP token are mapped, the logistics information management server 450 transmits, to the home appliance management server 460, a MAC address search request for searching for the MAC address of the home appliance 200 (S915).

The MAC address search request may include the product information.

The home appliance management server 460 searches for the MAC address matching the product information based on the product information (S917).

The home appliance management server 460 may store, in a database, a plurality of MAC addresses mapped to a plurality of serial numbers or a plurality of logistics barcodes.

The home appliance management server 460 may search for and extract the MAC address matched to the serial number or the logistics barcode.

When the MAC address is found, the home appliance management server 460 generates an auto registration key mapped to the MAC address, and maps and stores the MAC address and the auto registration key (S919).

The auto registration key may be a key generated for automatic registration of the home appliance 200. The auto registration key is a valid key only for a certain time, and cannot be used as a valid key after a certain time has elapsed.

The home appliance management server 460 transmits the MAC address and the auto registration key mapped thereto to the logistics information management server 450 (S921).

The logistics information management server 450 transmits the MAC address and the auto registration key mapped thereto to the mobile terminal 100 (923).

The mobile terminal 100 performs automatic registration of the home appliance 200 based on the received MAC address and auto registration key (S923).

The mobile terminal 100 may search for the home appliance 200 having the same MAC address based on the received MAC address, and may automatically register the found home appliance 200.

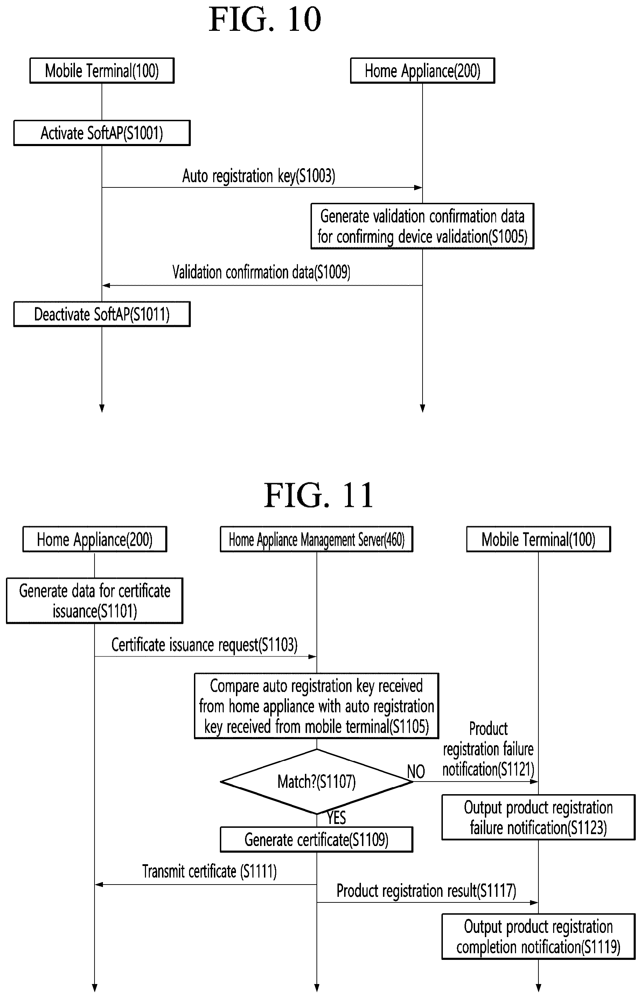

FIGS. 10 and 11 are ladder diagrams for describing a process of automatic product registration of a home appliance in detail according to an embodiment of the present disclosure.

In particular, FIGS. 10 and 11 are diagrams for describing operations S517 to S531 of FIG. 5 in detail.

Referring to FIG. 10, the mobile terminal 100 activates SoftAP (S1001) and transmits an auto registration key to the home appliance 200 matching a MAC address (S1003).

The mobile terminal 100 may also transmit information necessary for interworking, such as AP connection information and service code, in addition to the auto registration key.

The home appliance 200 generates validation confirmation data for device validation, based on the received auto registration key (S1005).

When the home appliance 200 does not receive the auto registration key, it is necessary to perform a registration process through a physical key input according to the related art rather than automatic registration.

The home appliance 200 transmits the generated validation confirmation data to the mobile terminal 100 (S1009).

The mobile terminal 100 deactivates the SoftAP upon reception of the validation confirmation data (S1011).

Next, FIG. 11 is described.

After receiving the auto registration key, the home appliance 200 generates certificate issuance data for certificate issuance (S1101).

The data for certificate issuance may be data generated in order to receive a certificate indicating that the home appliance 200 has been registered to the home appliance management server 460.

The data for certificate issuance may be encrypted through a server public key received from the home appliance management server 460.

The data for certificate issuance may include the auto registration key of the home appliance 200.

The home appliance 200 transmits, to the home appliance management server 460, a certificate issuance request including the data for certificate issuance (S1103).

The certificate issuance request may be included in the product registration request of operation S529 of FIG. 5.

The home appliance management server 460 receives the certificate issuance request received from the home appliance 200, and compares the auto registration key included in the certificate issuance request with the auto registration key received from the mobile terminal 100 (S1105).

The home appliance management server 460 may decrypt the certificate issuance data included in the certificate issuance request, and may extract the auto registration key from the decrypted data.

On the other hand, the mobile terminal 100 may transmit the product registration request transmitted to the home appliance management server 460 in operation S525 by including the auto registration key received from the logistics information management server 450 therein.

The home appliance management server 460 may compare the auto registration key received from the mobile terminal 100 with the auto registration key received from the home appliance 200.

The home appliance management server 460 determines whether the two auto registration keys match each other (S1107). When the two auto registration keys match each other, the home appliance management server 460 generates a certificate authenticating that the home appliance 200 is owned by the user (S1109).

The home appliance management server 460 may store the generated certificate.

The certificate may include a MAC address of the home appliance 200, a user number (or a user account) corresponding to the owner of the home appliance 200, and information indicating that product registration has been completed.

The home appliance management server 460 transmits the generated certificate to the home appliance 200 (S1111). Operation S1111 may correspond to operation 531 of FIG. 5.

At the same time, the home appliance management server 460 transmits, to the mobile terminal 100, a product registration result indicating that the home appliance 200 has been registered to the home appliance management server 460 (S1117).

Operation S1117 may correspond to operation S527 of FIG. 5.

The mobile terminal 100 outputs a notification indicating that the product registration has been completed, based on the received product registration result (S1119).

When the two auto registration keys do not match each other, the home appliance management server 460 transmits, to the mobile terminal 100, a product registration failure notification indicating that the registration of the home appliance 200 has failed (S1121).

The mobile terminal 100 outputs the received product registration failure notification (S1123).

Operation S1117 or S1121 may correspond to operation S527 of FIG. 5.

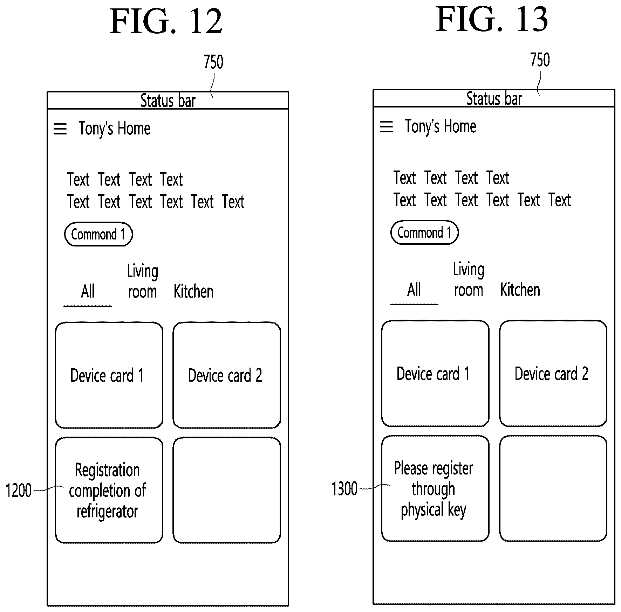

FIG. 12 is a diagram for describing a screen indicating that automatic registration of a home appliance is completed according to an embodiment of the present disclosure.

Referring to FIG. 12, when automatic registration of a refrigerator is completed, a notification 1200 indicating that the product registration of the refrigerator has been completed may be displayed on a device card corresponding to the refrigerator in an automatic registration process screen 750.

FIG. 13 is a diagram for describing a screen displayed when automatic registration of a home appliance fails according to an embodiment of the present disclosure.

Referring to FIG. 13, when the automatic registration of the refrigerator fails, a notification 1300 requesting product registration through a physical key (or a confirmation key) may be displayed on the device card corresponding to the refrigerator in the automatic registration process screen 750.

In this case, the user performs the product registration procedure through the conventional physical key input.

According to an embodiment of the present invention, by operating the mass production server 470 of the manufacturer, the logistics server 430 of the manufacturer, and the home appliance management app while interworking with each other, the product purchased by the customer and the product delivered to the customer are confirmed in the manufacturer system, thereby securing reliability.

Therefore, 1:1 mapping between the serial number or logistics barcode of the delivered product and the Wi-Fi MAC address of the product may be possible.

In addition, since the Wi-Fi MAC Address of the product delivered to the customer is received from the server based on the reliable data, it is possible to confirm that the product is the customer's own product by comparing the MAC Address of the product found through the home appliance management app installed on the mobile terminal 100 with the MAC Address received from the server.

After the request for the issuance of the auto registration key, automatic product registration is possible with a timeout of one hour, and mutual authentication with the mobile terminal 100, the home appliance 200, and the home appliance management server 460 is possible with this value.

A security policy at a level similar to the confirmation process using a physical key (whether the product is owned by the user through physical input) is used by requesting the certificate issuance in the product by using the auto registration key issued by the logistics server 430 and the interlocking with the logistics management server 450. Therefore, the confirmation process using the physical key may be omitted.

According to an embodiment of the present disclosure, the above-described method can be implemented with codes readable by a processor on a medium in which a program is recorded. Examples of the processor-readable medium may include ROM, RAM, CD-ROM, magnetic tape, floppy disk, and optical data storage device.

The display device described above is not limitedly applicable to the configuration and method of the above-described embodiments, and the embodiments are configured by selectively combining all or part of each of the embodiments such that various modifications can be made.
**The following items refer to preferred embodiments:**
**[item 1]**
   A mobile terminal comprising:
   a display;
   a wireless communication interface configured to perform wireless communication with a home appliance or an external server; and
   a controller configured to display an automatic registration guide screen on the display according to execution of a home appliance management app, to receive an automatic registration request for automatic registration of one out of one or more home appliances displayed on the automatic registration guide screen, and to display, on the display, an automatic registration process screen indicating that automatic registration of the corresponding home appliance is in progress in response to the received automatic registration request.
**[item 2]**
   The mobile terminal of item 1, wherein the controller is configured to receive, from a first server, an auto registration key corresponding to a MAC address of the home appliance according to the reception of the auto registration request, and to transmit the received auto registration key to a second server and the home appliance.
[**item 3]**
   The mobile terminal of item 2, wherein the controller is configured to display, from the second server, a notification indicating that the product registration of the home appliance has been completed on the display.
[**item 4]**
   The mobile terminal of item 2, wherein the controller is configured to display, from the second server, a notification requesting registration of the home appliance through a physical key of the home appliance on the display when the product registration of the home appliance has failed.
[**item 5]**
   The mobile terminal of item 2, wherein the controller is configured to invalidate the auto registration key after a certain time has elapsed.
[**item 6]**
   The mobile terminal of item 1, wherein the controller is configured to perform the automatic registration of the home appliance in a background.
[**item** 7]
   The mobile terminal of item 2, wherein the controller is configured to receive, from the first server, a push notification indicating that delivery of the home appliance has been completed, and to execute the home appliance management app according to the received push notification.
[**item 8]**
   A product registration method of a mobile terminal, the product registration method comprising:
   displaying an automatic registration guide screen according to execution of a home appliance management app;
   receiving an automatic registration request for automatic registration of one out of one or more home appliances displayed on the automatic registration guide screen; and
   displaying, in response to the received automatic registration request, an automatic registration process screen indicating that automatic registration of the corresponding home appliance is in progress.
[**item 9]**
   The product registration method of item 8, further comprising:
   receiving an auto registration key corresponding to a MAC address of the home appliance from a first server in response to reception of the automatic registration request; and
   transmitting the received auto registration key to a second server and the home appliance.
[item 10]
   The product registration method of item 9, further comprising displaying, from the second server, a notification indicating that the product registration of the home appliance has been completed.
[item 11]
   The product registration method of item 9, further comprising displaying, from the second server, a notification requesting registration of the home appliance through a physical key of the home appliance when product registration of the home appliance has failed.
[item **12]**
   The product registration method of item 9, wherein the auto registration key is invalidated after a certain time has elapsed.
[item **13]**
   The product registration method of item 8, wherein the automatic registration of the home appliance is performed in a background.
[item 14]
   The product registration method of item 9, further comprising:
   receiving, from the first server, a push notification indicating that delivery of the home appliance has been completed; and
   executing the home appliance management app according to the received push notification.

## Claims

1. A mobile terminal (100) comprising:
a display (150);
a wireless communication interface (110) configured to perform wireless communication with a home appliance (200) or one or more external servers; and
a controller (190) configured to:
execute (S505) a home appliance management application,
transmit (S507), to a first server (450), a request for information on delivery of the home appliance (200), wherein the information on the delivery of the home appliance (200) includes a MAC address of the home appliance (200) for which the delivery has been completed and which is corresponded to a user identifier,
receive (S515) the requested information and an automatic registration key for an automatic registration of the home appliance (200), the registration key being generated by the first server (450) based on a response for the request received from a second server (460),
search (S517) the home appliance (200) based on the information,
transmit (S519) a request to connect to the searched home appliance (200) through the received automatic registration key,
display an automatic registration guide screen on the display (150) according to the execution of the home appliance management application,
receive an automatic registration request for automatic registration of one out of one or more home appliance displayed on the automatic registration guide screen, and
display, on the display (150), an automatic registration process screen indicating that automatic registration of the corresponding home appliance is in progress in response to the received automatic registration request.

2. The mobile terminal (100) of claim 1, wherein the controller (190) is configured to display, from the second server (460), a notification indicating that the product registration of the home appliance (200) has been completed on the display (150).

3. The mobile terminal (100) of claim 1, wherein the controller (190) is configured to display, from the second server (460), a notification requesting registration of the home appliance (200) through a physical key of the home appliance (200) on the display (150) when the product registration of the home appliance has failed.

4. The mobile terminal (100) of claim 1, wherein the controller (190) is configured to invalidate the auto registration key after a certain time has elapsed.

5. The mobile terminal (100) of claim 1, wherein the controller (190) is configured to perform the automatic registration of the home appliance in a background.

6. A product registration method of a mobile terminal (100), the product registration method comprising:
executing (S505) a home appliance management application;
transmitting (S507), to a first server (450), a request for information on delivery of the home appliance (200), wherein the information on the delivery of the home appliance (200) includes a MAC address of the home appliance (200) for which the delivery has been completed and which is corresponded to a user identifier;
receiving (S515) the requested information and an automatic registration key for an automatic registration of the home appliance (200), the registration key being generated by the first server (450) based on a response for the request received from a second server (460);
searching (S517) the home appliance (200) based on the information;
transmitting (S519) a request to connect to the searched home appliance (200) through the received automatic registration key;
displaying an automatic registration guide screen according to the execution of the home appliance management application;
receiving an automatic registration request for automatic registration of one out of one or more home appliances displayed on the automatic registration guide screen; and
displaying, in response to the received automatic registration request, an automatic registration process screen indicating that automatic registration of the corresponding home appliance is in progress.

7. The product registration method of claim 6, further comprising displaying, from the second server (460), a notification indicating that the product registration of the home appliance has been completed.

8. The product registration method of claim 6, further comprising displaying, from the second server (460), a notification requesting registration of the home appliance through a physical key of the home appliance when product registration of the home appliance has failed.

9. The product registration method of claim 6, wherein the auto registration key is invalidated after a certain time has elapsed.

10. The product registration method of claim 6, wherein the automatic registration of the first home appliance is performed in a background.
